# EUROPEAN PATENT SPECIFICATION

(11) **EP 0 508 131 B1**
(45) Date of publication and mention of the grant of the patent: **17.07.1996**
(21) Application number: 92104115.8
(22) Date of filing: 11.03.1992
(51) Int. Cl.: C03B 11/08, C03B 11/00, C03B 32/02, B28B 3/00, G11B 5/62

(54) **Method for forming flat glass-ceramic articles**
Verfahren zum Formen von flachen, glaskeramischen Körpern
Procédé de façonnage de corps plats en vitrocéramique

(30) Priority: 09.04.1991 US 682657
(43) Date of publication of application: 14.10.1992
(73) Proprietor: CORNING INCORPORATED, Corning, N.Y. 14831 (US)
(72) Inventor: Blakeslee, William, Deceased (US); Davidson, Ronald Alan, Corning Incorporated, Corning, NY 14831 (US); Giles, Edwin Quentin, Corning Incorporated, Corning, NY 14831 (US); Menihan, Robert Merrick, Corning Incorporated, Corning, NY 14831 (US)
(74) Representative: Marchant, James Ian

(56) References cited:
- EP-A- 0 305 792
- EP-A- 0 508 065
- EP-A- 0 508 066
- US-A- 3 244 497
- US-A- 3 372 017
- US-A- 3 819 352
- US-A- 4 941 906

## Description

This invention relates to a process for the production of thin, flat glass and glass-ceramic articles. More specifically, this invention is directed toward a method of forming substantially flat, thin disc-shaped glass-ceramic articles of essentially uniform thickness using near-net-shape pressing followed by flat heat-treating. The resultant discs after minimal finishing are suitable for use as a substrate for magnetic memory discs.

The market for rigid magnetic storage is well established and growing with even greater advances being foreseen through the utilization of thin film media technology. The rigid disk substrates for use in these magnetic memory storage devices are designed for high performance applications and thus must meet a wide range of criteria. U.S. -A-4,971,932 (Alpha et al) discloses a glass-ceramic substrate material for use in the rigid information disk which satisfies these varied criteria. These glass-ceramics, containing either a sheet silicate or a chain silicate as the predominate crystal phase, still, when made using traditional forming methods, fell short of some of these criteria without secondary processing. Chief among these shortcomings was the stringent flatness requirement the substrate must meet; for example, a disk having an outside diameter of 95 mm can only be as much as 10 µm out of flat across its diameter. The traditional methods for making these glass-ceramic articles, typically manufactured from sheet glass or oversize blanks, not only fell considerably short of the flatness requirement (50-100µm versus the required 10µm), but they also exhibited a low raw material utilization efficiency. Because of this flatness shortcoming following initial forming, extensive and expensive mechanical finishing, i.e., grinding and polishing, was required to make the articles suitable for use as substrates. These two factors, low raw material utilization efficiency and extensive secondary finishing, led to a high cost of production for these traditional manufacturing methods. Therefore, it is self-evident that manufacturing costs could be minimized by reducing the secondary operations required, through increasing the flatness of the pressed article and increasing the raw material utilization through the implementation of a near net-shape production process.

In US-A-4,941,906 there is disclosed a method of making glass optical elements by molding in which molds are moved towards one another to press the glass and controlling the movement of the molds to balance the complete formation of the molded surfaces. The object of the invention is to achieve balanced molding of lenses by using adjustments to the closing movement of the molds.

In EP-A-0 305 792 there is described a method for manufacturing a glass article for precision-optical, especially image-forming purposes, by press molding which article does not require after-treatment at least in the optical regions. The method involves use of a compression mold having die surfaces of a wear-resistant material with the parts of the die surfaces exposed to the article to be pressed having a high surface quality corresponding to the glass article to be produced. A glass preform is used with a high surface quality in the optically relevant regions which is shaped in the compression mold at elevated temperature in a substantially inert atmosphere and is cooled in the mold until it has adequate dimensional stability to be removed as a finished glass molded article. The compression mold has die surfaces constructed on support layers of an amorphous, monocrystalline or polycrystalline material having a particle size of less than 0.5µm and the compression procedure is temperature controlled in such a way that at the start of compression the preform and at least one of the die surfaces have a temperature difference which is at least 30°K but is below the value at which inhomogeneities and/or surface defects in the pressed part can be expected.

Therefore, the object of this inventive method is to solve the prior art shortcomings and provide for a method of near net-shape manufacture, pressing and heat-treating, which increases raw material utilization efficiency and which produces glass-ceramic magnetic memory discs substrates which possess the required flatness without extensive finishing.

### Summary of the Invention

In general, this invention provides a method for press molding a thin, substantially flat glass article possessing a substantially uniform thickness comprising the steps of:
(a) heating receiving and opposing molding surfaces of a mold said surfaces being comprised of a material which exhibits near zero thermal expansion and possesses a substantially non-stick surface, to predetermined different temperatures the temperature of the receiving molding surface being greater than that of the opposing molding surface;
(b) delivering to said receiving molding surface a glass charge;
(c) aligning and maintaining said receiving and opposing molding surfaces such that they are in substantially parallel relationship;
(d) bringing said receiving and opposing molding surfaces of said mold into close proximity to press mold said delivered charge of molten glass into the desired glass article of substantially uniform thickness;
(e) removing said glass article from said mold;
   characterised in that press molding is carried out for a period of time sufficient to thereby symmetrically remove enough heat from the press molded glass article to thereby result in the said receiving and opposing molding surfaces and the press molded glass article surfaces reaching substantially equal temperatures at the same time.

The method of the invention provides as further steps to produce a glass-ceramic article:
(a) placing said press molded article between, and into contact with, opposing layers of a refractory insulating setter material;
(b) heat treating said glass article placed between the layers of setter material at a temperature and for a time sufficient to cause said glass article to thereby form a glass-ceramic article; and
(c) cooling said covered glass-ceramic article to room temperature and removing the glass ceramic article from the layers of setter material.

In utilizing this method for producing the glass-ceramic certain advantages are achieved, (1) the forming of the glass article from the glass charge is nearly complete upon removal from the molding surface; and, (2) assuming that the tooling surfaces are substantially flat and parallel and that differential mold heating is utilized to avoid warping, the glass charge will assume the shape imparted to it by the press, i.e., a thin, substantially flat disc-shaped glass article (3) the glass article will retain its pressed shape, specifically its flatness, in its glass-ceramic form as a result of the heat treating step. Simply stated, the above steps describe a near net shape, both the pressing and heat-treating, forming method.

### Description of the Preferred Embodiment

The first step involved in the production of a typical glass-ceramic suitable for magnetic memory disk (hereinafter MMD) applications is differentially heating the receiving and opposing molding surfaces of a mold apparatus so that symmetric amounts of heat will be transferred from the subsequently delivered mlten glass charge's surfaces. This step, directed towards the production of substantially flat glass articles, is more fully described in US-A-5,192,353 (Trentelman) (EP-A-0508066).

For the present invention to perform properly and thus ensure that near net shape pressing is achieved, the proper material for the mold tooling, both receiving and opposing molding surfaces, is the first consideration. The tooling must be comprised of a material to which molten glass will not stick, i.e, the material must exhibit non-stick surfaces. This ensures that the glass article, once formed, may be released freely from the mold. In other words, this method would not be appropriate for use with traditional metal tooling where, to some degree, the glass adheres to the tool surface and then must be "peeled away" to get the glass off the tool. Typically, in the glass industry, this non-stick character is accomplished through the use of parting agents, non-stick coatings or materials which possess inherent non-stick behavior. The preferred embodiment for the present inventive method comprises utilizing materials with the inherent non-stick behavior. In addition to this non-stick behavior, it is also desirable that the material used for the mold tooling possess near zero thermal expansion characteristics. Representative materials possessing these characteristics include boron nitride and its composites, silicon carbide, graphite and pyrolytic graphite. However, the most preferred embodiment comprises using either silicon carbide coated graphite or boron nitride for the mold's receiving and opposing surfaces.

Once the molding surfaces are comprised of the proper material, the first step involves heating the receiving and opposing molding surfaces to predetermined different temperatures. The actual heat differential (°C) required between the receiving and opposing molding surfaces to achieve symmetric heat removal from the opposing surfaces of a glass charge is dependent upon a number of factors: (1) the pressing or dwell time required for the formation of the resultant glass article; (2) the material used for the receiving and opposing molding surfaces; (3) the dimensions of the resultant glass articles; and, (4) the excess gob-in-mold (GIM), or excess contact time the glass charge has with the mold receiving surface. The illustrations to follow, all resulting in symmetric heat removal, i.e., near net-shape pressed articles, list examples of typical temperature differentials, as well as illustrate that the differential varies with changes in the above listed factors.

Although the size of the temperature differential is not fixed, it is known that the differential range can be no larger than the operating range of the molding material itself. In other words the upper limit of the differential is the mold material "sticking" temperature; the molding surface having the higher temperature cannot be heated above the temperature at which molten glass will stick to, even non-stick, molding surfaces. Secondly, the lower limit of the differential is the "optical check or defect" temperature; the molding surface set at the lower temperature may not be maintained below the point at which checks or optical defects begin to develop in the final glass product. This mold operating range, however, would vary depending on the starting glass composition utilized.

To effectively utilize this forming method it is necessary to incorporate within the system a means for controlling the tooling surface temperatures which has a requisite temperature control precision of within +/- 5°C of a required set point. More preferably, the controlling means should possess a controlling precision of at least +/- 2°C. Assuming the more preferred range, any method of temperature control which has the required precision to maintain this temperature range would be suitable in the preferred embodiment for this method.

The most preferred embodiment involves maintaining the receiving molding surface at a higher temperature than that of the opposing molding surface to compensate for the excess contact time that the glass charge has therewith prior to the essential pressing contact with the opposing molding surface. Whereas it is generally more practical to maintain the receiving surface at a higher temperature through the use of materials exhibiting the necessary thermal properties, that practice may not be required. It is only necessary that symmetric heat removal be achieved. In this way, warping is avoided as the glass article cools, and near net-shape pressed glass articles are produced.

Once the mold surfaces are differentially maintained at the proper temperatures the next steps actually involve forming or pressing the glass charge to form the glass article of the desired shape. First, a molten glass charge of sufficient volume to form the desired article is delivered to the receiving molding surface. The glass charge should have a viscosity range within 10-500 Pa.s (10²-5x10³ poise). It is during this time that the receiving molding surface "excess contact time" occurs. Secondly, the receiving and opposing molding surfaces are then brought into essential contact (the glass charge being pressed therebetween prevents actual contact) with each other and the glass charge is pressed with a load sufficient to form the glass article of desired shape. The glass charge is pressed for a time sufficient to remove enough heat from the delivered glass charge that the temperatures of the molding surfaces and glass charge are all nearly at equilibrium below the glass charges softening point. The combination of the differential mold surface temperatures and the excess press time allows the glass charge to experience symmetric heat removal. Additionally, as a result of this combination, the temperatures of the molding surfaces and the glass charge reach equilibrium at nearly the same time. Upon the completion of the pressing operation, the near net-shape glass article is removed from the receiving molding surface.

Next, a parallel fit is provided and maintained between the receiving and opposing molding surfaces, thus ensuring that the glass article subsequently pressed will possess substantially parallel opposing surfaces, i.e., a glass article of essentially uniform thickness. A preferred or suggested method of thermally aligning the opposing molding surfaces to be parallel is more completely described in US-A-5,125,945 Menihan et al (EP-A-0508065).

Once proper mold surface temperatures and parallel opposing molding surfaces are achieved, the molten glass may be delivered and pressed into the proper shape to form the glass article. A gob of molten glass of the precise weight to form the disc-shaped article and with a viscosity range from 10-100 Pa.s (10²-10³ poise) is cut and dropped onto the receiving molding surface of the molding apparatus. It is then indexed to a position where an opposing molding surface is brought into essential contact with this receiving molding surface, with the glass charge being pressed therebetween to form the desired disc-shape article. The glass article is then removed from the press.

However, note that the pressing of the glass charge continues until enough heat is removed from the charge such that the glass charge's temperature along with that of the opposing molding surfaces are all nearly at equilibrium at a point below the charge's softening point.

The glass composition embodying the preferred composition for the uniformly thick, substantially flat thin disc-shaped articles suitable as MMDs is that used as the precursor glass for the production of canasite glass-ceramics. This precursor glass composition, disclosed in U.S. Patent No. 4,386,162 (Beall), consists essentially, in weight percent on the oxide basis of about 45-75% SiO₂, 8-30% CaO, 2.5-12% F, 3-15% Na₂O, 0-20% K₂O, 5-25% Na₂O+K₂O, 0-6% B₂O₃, 0-7% Al₂O₃, and 0-8% ZrO₂, with the most preferred composition stated to have an analyzed composition of about 50-65% SiO₂, 15-24% CaO, 3-13% Na₂O, 3-15% K₂O, 11-22% Na₂O+K₂O, 0-3% B₂O₃, 0-3% Al₂O₃, and 0-8% ZrO₂.

Once the glass article of the above composition has been pressed into the desired shape, the last step, i.e., transforming the glass article into glass-ceramic form through heat-treating, is undertaken. However, prior to the actual heat-treating, the glass articles must be properly prepared. This preparation step involves covering the opposing flat surfaces of the disc-shaped glass article with setters. Covered discs transform much flatter than uncovered discs due to the reduction of axial temperature gradients, which, in bodies as thin as required for MMD applications, would generally cause the disc to warp. Allowing the glass article to warp as a result of the heat-treating step would destroy the substantial flatness and essential uniform thickness achieved in the previous pressing steps.

The setter material used is preferably comprised of a refractory-type insulating setter material; representative materials include cordierite, alumina and graphite. However, the most preferred material is graphite due to the fact that graphite produces much flatter parts than the other materials; some as flat as 1µm across the diameter. Additionally, graphite setters tend to produce parts with much greater surface smoothness.

It is not necessary to stack these "sandwiches" for the invention to be operative; however, stacking of the disks will reduce both the cost and size of the heat treatment equipment. There is no ideal number of disks to be stacked; stacks as high as 43 parts have been effectively utilized resulting in flatness measurements of 7.3 +/- 2.0µm across a 95mm disk diameter.

One added requirement to the heat treating step, if stacking of the disks is undertaken, is the addition of a layer of insulation located on both the top surface or the uppermost setter and bottom surface of the lowermost setter. This insulation layer, comprised of any low thermal conductivity material, essentially eliminates the axial temperature gradients experienced by the top and bottom disks in their uninsulated state. Specifically for this embodiment FIBERFRAX insulation marketed by Carborundum, Niagara Falls, NY was used. Insulation thickness, ranging from 0.15-1.90 cm (1/16 in. to 3/4 in.) was effectively used.

Generally, for heat treating the above described precursor glass to convert it to its canasite glass-ceramic state, the glass is suitably heated at a temperature somewhat above its annealing point for a time at least sufficient to develop crystal nuclei therein. The glass is then further heated, usually at a higher temperature between the glass annealing and glass softening points, to develop the predominate crystal phase therein. The heat treatment schedule for the preferred embodiment involves a five stage heat treatment: (1) heating from ambient temperature to about 600°C at the rate of approximately 150°C/hour; (2) maintaining the temperature of about 600°C for 2 hours to cause the development of nuclei; (3) heating to about 850°C at the rate of approximately 125°C/hour; (4) maintaining the temperature at about 850°C to develop the canasite crystals on the developed nuclei; and, (5) allowing the glass-ceramic article to cool to ambient temperature.

## Claims

1. A method for press molding a thin, substantially flat glass article possessing a substantially uniform thickness comprising the steps of:
(a) heating receiving and opposing molding surfaces of a mold said surfaces being comprised of a material which exhibits near zero thermal expansion and possesses a substantially non-stick surface, to predetermined different temperatures the temperature of the receiving molding surface being greater than that of the opposing molding surface;
(b) delivering to said receiving molding surface a glass charge;
(c) aligning and maintaining said receiving and opposing molding surfaces such that they are in substantially parallel relationship;
(d) bringing said receiving and opposing molding surfaces of said mold into close proximity to press mold said delivered charge of molten glass into the desired glass article of substantially uniform thickness;
(e) removing said glass article from said mold;
characterised in that press molding is carried out for a period of time sufficient to thereby symmetrically remove enough heat from the press molded glass article to thereby result in the said receiving and opposing molding surfaces and the press molded glass article surfaces reaching substantially equal temperatures at the same time.

2. A method according to claim 1, for the production of a glass ceramic article comprising the further steps of;
(a) placing said press molded article between, and into contact with, opposing layers of a refractory insulating setter material;
(b) heat treating said glass article placed between the layers of setter material at a temperature and for a time sufficient to cause said glass article to thereby form a glass-ceramic article; and
(c) cooling said covered glass-ceramic article to room temperature and removing the glass ceramic article from the layers of setter material.

3. A method according to claim 1 or claim 2 wherein the mold surface material is selected from the group consisting of boron nitride, boron nitride composites, silicon carbide, silicon carbide coated graphite and pyrolytic graphite.

4. A method according to claim 2 wherein said refractory insulating setter material is shaped in the configuration of setters with said glass article being placed between two setters to form a sandwich.

5. A method according to claim 4 wherein several press molded glass articles are stacked on top of each other with a layer of refractory insulating setter material being provided between adjacent press molded articles, said top surface of uppermost press molded article and bottom surface of lowermost press molded article being provided with a layer of refractory insulating setter material and an additional insulation layer of sufficient thickness to eliminate the axial temperature gradients experienced by said top and bottom surfaces.

6. A method according to any of claims 2 to 5 wherein said refractory insulating material is selected from the group consisting of alumina, cordierite, and graphite.

## Patentansprüche

1. Verfahren zur Preßformung eines dünnen, im wesentlichen ebenen Glasgegenstandes mit im wesentlichen gleichmäßiger Dicke mit den nachfolgenden Schritten:
(a) Erhitzen der Aufnahme- und der gegenüberliegenden Formgebungsoberflächen einer Form, wobei die Oberflächen aus einem Material bestehen, das eine Wärmeausdehnung von nahe Null aufweist und eine im wesentlichen nichthaftende Oberfläche besitzt, auf vorher festgelegte, unterschiedliche Temperaturen, wobei die Temperatur der Aufnahme-Formgebungsoberfläche größer ist als die der gegenüberliegenden Formgebungsoberfläche;
(b) Zuführen eines Glasansatzes zur Aufnahme-Formgebungsoberfläche;
(c) Ausrichten und Beibehalten der Aufnahme- und der gegenüberliegenden Formgebungsoberflächen, so daß sie in im wesentlichen paralleler Ausrichtung vorliegen;
(d) Nahebringen der Aufnahme- und der gegenüberliegenden Formgebungsoberflächen der Form, um den zugeführten Ansatz des geschmolzenen Glases zum gewünschten Glasgegenstand mit einer im wesentlichen gleichmäßigen Dicke zu pressen;
(e) Entfernen des Glasgegenstandes aus der Form; dadurch gekennzeichnet, daß die Preßformung für eine Zeitdauer durchgeführt wird, die ausreichend ist, um hierdurch symmetrisch eine ausreichende Wärmemenge aus dem preßgeformten Glasgegenstand zu entfernen, um hierdurch zu erreichen, daß die Aufnahme- und die gegenüberliegenden Formgebungsoberflächen und die Oberflächen des preßgeformten Glasgegenstandes gleichzeitig im wesentlichen gleiche Temperaturen erreichen.

2. Verfahren nach Anspruch 1 zur Herstellung eines Glaskeramikgegenstandes mit den weiteren Schritten:
(a) Einbringen des preßgeformten Gegenstandes zwischen und in Kontakt mit gegenüberliegenden Schichten eines refraktären, isolierenden Einsatzbehältermaterials;
(b) Hitzebehandeln des zwischen die Schichten des Einsatzbehältermaterials eingebrachten Glasgegenstandes bei einer Temperatur und für eine Zeitdauer, die ausreichend sind, um zu erreichen, daß der Glasgegenstand zu einem Glaskeramikgegenstand geformt wird; und
(c) Abkühlen des bedeckten Glaskeramikgegenstandes auf Raumtemperatur und Entfernen des Glaskeramikgegenstandes aus den Schichten des Einsatzbehältermaterials.

3. Verfahren nach Anspruch 1 oder Anspruch 2, wobei das Formoberflächenmaterial aus der Gruppe bestehend aus Bornitrid, Bornitrid-Verbundstoffen, Siliciumcarbid, mit Siliciumcarbid beschichtetem Graphit und pyrolytischem Graphit ausgewählt wird.

4. Verfahren nach Anspruch 2, wobei das refraktäre isolierende Einsatzbehältermaterial in der Ausgestaltung von Einsatzbehältern ausgebildet ist, wobei der Glasgegenstand zwischen zwei Einsatzbehältern unter Bildung einer Sandwich-Struktur angeordnet ist.

5. Verfahren nach Anspruch 4, wobei verschiedene, preßgeformte Glasgegenstände aufeinander gestapelt werden, wobei eine Schicht aus dem refraktären, isolierenden Einsatzbehältermaterial zwischen die benachbarten, preßgeformten Gegenstände angeordnet wird, wobei die obere Oberfläche des obersten preßgeformten Gegenstandes und die untere Oberfläche des untersten preßgeformten Gegenstandes mit einer Schicht aus einem refraktären, isolierenden Einsatzbehältermaterial und einer zusätzlichen Isolierschicht mit ausreichender Dicke versehen sind, um die axialen Temperaturgradienten zu beseitigen, die bei den oberen und unteren Oberflächen auftreten.

6. Verfahren nach einem der Ansprüche 2 bis 5, wobei das refraktäre isolierende Material aus der Gruppe, bestehend aus Aluminiumoxid, Cordierit und Graphit ausgewählt wird.

## Revendications

1. Un procédé pour mouler par compression un article en verre mince et sensiblement plat présentant une épaisseur sensiblement uniforme comprenant les opérations consistant :
(a) à chauffer des surfaces réceptrice et antagoniste d'un moule, lesdites surfaces étant constituées d'une matière qui présente un dilatation thermique proche de zéro et possède une surface sensiblement non adhésive, à des températures différentes prédéterminées, la température de la surface de moulage réceptrice étant supérieure à celle de la surface de moulage antagoniste ;
(b) à délivrer à ladite surface de moulage réceptrice une charge de verre ;
(c) à aligner et à maintenir lesdites surfaces de moulage réceptrice et antagoniste de manière qu'elles soient sensiblement parallèles entre elles ;
(d) à amener à proximité immédiate l'une de l'autre lesdites surfaces de moulage réceptrice et antagoniste dudit moule pour mouler par compression ladite charge délivrée de verre fondu en l'article en verre désiré d'épaisseur sensiblement uniforme ;
(e) à retirer ledit article en verre dudit moule ;
caractérisé en ce que le moulage par compression est opéré pendant une durée suffisante pour évacuer symétriquement suffisamment de chaleur de l'article en verre moulé par compression pour faire atteindre auxdites surfaces de moulage réceptrice et antagoniste et aux surfaces de l'article en verre moulé par compression des températures sensiblement égales en même temps.

2. Un procédé selon la revendication 1, pour la production d'un article en vitrocéramique comprenant les opérations supplémentaires consistant :
(a) à placer ledit article moulé par compression entre et en contact avec des couches en vis-à-vis d'une matière conformatrice isolante réfractaire ;
(b) à traiter thermiquement ledit article en verre placé entre les couches de matière conformatrice à une température et pendant une durée suffisantes pour faire former ainsi audit article en verre un article en vitrocéramique ; et
(c) à refroidir ledit article en vitrocéramique couvert jusqu'à la température ambiante et à retirer l'article en vitrocéramique des couches de matière conformatrice.

3. Un procédé selon la revendication 1 ou la revendication 2 dans lequel la matière de surface de moule est choisie dans le groupe formé par le nitrure de bore, les composites de nitrure de bore, le carbure de silicium, le graphite revêtu de carbure de silicium et le graphite pyrolytique.

4. Un procédé selon la revendication 2 dans lequel ladite matière conformatrice isolante réfractaire est conformée à la configuration de conformateurs avec disposition dudit article en verre entre deux conformateurs pour former un sandwich.

5. Un procédé selon la revendication 4 dans lequel plusieurs articles en verre moulés par compression sont empilés les uns par-dessus les autres avec disposition d'une couche de matière conformatrice isolante réfractaire entre articles moulés par compression adjacents, la face supérieure de l'article moulé par compression du haut de l'empilement et la face inférieure de l'article moulé par compression du bas de l'empilement étant pourvues d'une couche de matière conformatrice isolante réfractaire et d'une couche d'isolant additionnelle d'épaisseur suffisante pour éliminer les gradients de température axiaux subis par lesdites faces supérieure et inférieure.

6. Un procédé selon l'une quelconque des revendications 2 à 5 dans lequel ladite matière isolante réfractaire est choisie dans le groupe formé par l'alumine, la cordiérite et le graphite.
